# DEMANDE DE BREVET EUROPEEN

(11) **EP 1 623 630 A1**
(43) Date de publication de la demande: **08.02.2006**
(21) Numéro de dépôt: 04405488.0
(22) Date de dépôt: 03.08.2004
(51) Int. Cl.: A23L 1/236

(54) **Sucrant en poudre pour alimentation humaine**

(71) Demandeur: Pancosma S.A., 1218 Le Grand-Saconnex (CH)
(72) Inventeur: Felisaz, Denis, 74490 Megevette (FR); Sinet, Nathalie, 74160 Saint Julien En Genevois (FR); Thieblemont, Carole, 74200 Jouvernex Margencel (FR)
(74) Mandataire: Savatier, Yves

(57) **Abrégé**

L'invention concerne un sucrant en poudre pour alimentation humaine se présentant sous forme d'un mélange intime dont la répartition édulcorant/potentiateur est sensiblement homogène, non statistique, et dont la proportion de l'édulcorant par rapport au potentiateur est sensiblement constante et égale d'une particule de poudre à l'autre, caractérisé en ce l'édulcorant est choisi parmi le saccharinate de sodium, lé saccharinate de calcium, la saccharine, et un mélange de ces substances, et le potentiateur comprend un mélange de NHDC et d'un arôme de type vanille, les quantités de l'édulcorant et du mélange de NHDC et d'un arôme de type vanille étant choisies de façon à conférer au sucrant un caractère sensoriel le rapprochant du goût du sucre, un procédé pour préparer ce sucrant et une formulation alimentaire en granulés le contenant.

## Description

La présente invention se rapporte à un sucrant en poudre pour alimentation humaine avec un caractère sensoriel le rapprochant du goût du sucre.

Le sucre de table, essentiellement constitué de sucrose ou saccharose, est l'édulcorant le plus apprécié pour ses propriétés gustatives mais il est riche en calories. Dans de nombreux produits pour alimentation humaine, on cherche donc à le remplacer par des sucrants ou édulcorants moins riches en calories dont le caractère sensoriel se rapproche du goût du sucre.

Traditionnellement, les sucrants en poudre pour l'alimentation humaine sont composés d'un mélange statistique de plusieurs poudres de granulométries très différentes, à savoir d'édulcorants d'une granulométrie relativement grossière et mélangée à un potentiateur se présentant sous forme d'une poudre beaucoup plus fine. L'édulcorant, c'est-à-dire l'agent qui apporte le goût sucré est habituellement de la saccharine ou du saccharinate de sodium ou de calcium, parfois d'autres édulcorants intenses d'origine naturelle ou artificielle.

Le rôle du potentiateur est double. D'abord, comme son nom l'indique, il a comme effet de prolonger la perception du goût sucré qui, en son absence, serait trop fugitive. Un bon potentiateur, tels que ceux utilisés classiquement, permet d'augmenter la perception sucrée dans le temps d'environ 50 à 80 %. L'autre effet du potentiateur, et non des moindres, est de masquer les goûts secondaires ou parasites de l'édulcorant, par exemple de masquer le goût amer et métallique de la saccharine ou de ses sels de sodium et de calcium.

Afin de lever toute ambiguïté dans la terminologie utilisée ci-après, nous utiliserons le terme de "sucrant" pour désigner le mélange édulcorant/potentiateur, objet de l'invention, ainsi que les produits traditionnels correspondants qui serviront de comparaison, tandis que nous utiliserons l'expression "formulation sucrante" ou "prémélange sucrant", lorsque le sucrant proprement dit est dispersé dans un support. Cette formulation sucrante, en quelque sorte un condiment comme le sel ou le poivre, sera ensuite incorporée dans l'aliment final.

Les sucrants traditionnels sont des mélanges statistiques d'un ou plusieurs édulcorants et d'un ou plusieurs potentiateurs dont, comme déjà indiqué plus haut, les granulométries sont très différentes. Malgré le soin que l'on peut apporter à leur réalisation, il ne peut en résulter que des mélanges présentant une forte hétérogénéité.

Cette très forte heterogénéité peut entraîner des variations dans le profil du goût sucré des aliments, une bouchée pouvant présenter un goût sucré à peine perceptible, tandis que la bouchée suivante peut être, elle, trop sucrée voire amère et métallique par suite des difficultés à masquer l'arrière-goût de la saccharine, en dépit de la présence du potentiateur, lorsque celle-ci est en trop forte concentration. Les formulations sucrantes à base de sucrants grossiers ne donnent ainsi que modérément satisfaction.

Pour résoudre ce problème, la demande de brevet EP928564 propose un procédé de préparation de sucrant en poudre pour alimentation humaine comprenant la préparation d'un mélange en solution d'un édulcorant et d'un potentiateur, puis la pulvérisation de ce mélange par atomisation séchage pour obtenir une poudre. Le sucrant en poudre ainsi obtenu se présente sous forme d'un mélange intime dont la répartition édulcorant/potentiateur est sensiblement homogène, non statistique, et dont la proportion de l'édulcorant par rapport au potentiateur est sensiblement constante et égale d'une particule de poudre à l'autre. Ce document propose différentes compositions de sucrant en poudre dans lesquelles l'édulcorant est choisi dans le groupe comprenant les saccharïnates de sodium ou de calcium, la saccharine, l'aspartame, l'acésulfame, les cyclamates et le stévioside, et leurs mélanges, et le potentiateur est choisi dans le groupe comprenant la thaumatine, la néohespéridine dihydrochalcone (NHDC), la glycyrrhizine, et leurs mélanges, la proportion édulcorant/potentiateur étant comprise entre 99,95/0,05 et 85/15, en parties pondérales. Ces compositions de sucrant apportent un progrès important par rapport aux compositions de sucrant traditionnelles car elles apportent un goût constant aux formulations sucrantes obtenues en les dispersant sur un support. Toutefois les compositions divulguées par ce document ont un caractère sensoriel assez éloigné du goût du sucre.

La présente invention est fondée sur la découverte surprenante que pour certains édulcorants un potentiateur comprenant un mélange de NHDC et d'un arôme de type vanille dans des proportions appropriées confère au sucrant un caractère sensoriel le rapprochant du goût du sucre.

L'invention concerne un sucrant en poudre pour alimentation humaine se présentant sous forme d'un mélange intime dont la répartition édulcorant/potentiateur est sensiblement homogène, non statistique, et dont la proportion de l'édulcorant par rapport au potentiateur est sensiblement constante et égale d'une particule de poudre à l'autre, caractérisé en ce que l'édulcorant est choisi parmi le saccharinate de sodium, le saccharinate de calcium, la saccharine et un mélange de ces substances, et le potentiateur est un mélange de NHDC et d'un arôme de type vanille, les quantités de l'édulcorant et du mélange de NHDC et d'un arôme de type vanille étant choisies de façon à conférer au sucrant un caractère sensoriel le rapprochant du goût du sucre.

Le sucrant de l'invention possède un caractère sensoriel proche du sucre, en particulier un goût sucré de longue durée avec rondeur et sensation en bouche et absence d'astringence ou d'arrière-goût métallique ou amer.

L'arôme de type vanille peut être la vanilline, c'est-à-dire le 3-méthoxy-4-hydroxybenzaldéhyde, en général obtenue par extraction de gousses de vanille ou par synthèse à partir du gaïacol par condensation ou de la lignine, l'éthyl-vanilline, c'est-à-dire le 3-éthoxy-4-hydroxybenzaldéhyde, présente dans les gousses de certaines variétés de vanille de Tahiti et habituellement obtenue par voie de synthèse très proche de celle utilisée pour la vanilline, ou un autre dérivé de la vanilline qui a un pouvoir aromatique semblable. De préférence l'arôme de type vanille est choisi parmi la vanilline et l'éthyl-vanilline, la vanilline étant particulièrement appréciée.

Lorsque l'arôme de type vanille est la vanilline, le rapport, en poids, entre les quantités de NHDC et de vanilline est en général de 6 à 1,0, de préférence de 2,5 à 1,5, en particulier de 2,2 à 1,8.

Lorsque l'arôme de type vanille est l'éthylvanilline, le rapport, en poids, entre les quantités de NHDC et de vanilline est en général de 24 à 2,5, de préférence de 10 à 3, en particulier de 6 à 4.

Un sucrant intéressant est celui qui comprend, en poids, de 97,6 à 99,5 % de saccharinate de sodium, de 0,40 à 2,0 % de NHDC et de 0,10 à 0,80 % d'arôme de type vanille.

Des exemples de compositions d'un tel sucrant particulierement intéressants au plan sensoriel sont celles qui comprennent, en poids :
- de 97,6 à 99,5 % de saccharinate de sodium, de 0,4 à 2,0 % de NHDC et de 0,1 à 0,4 % d'éthylvanilline, en particulier de 98,8 % de saccharinate de sodium, 1,0 % de NHDC et 0,2% d'éthylvanilline, et
- de 97,7 à 99,3 % de saccharinate de sodium, de 0,40 à 1,5 % NHDC et de 0,30 à 0,80 % de vanilline, en particulier 98,5 % de saccharinate de sodium, 1,0 % de NHDC et 0,5 % de vanilline.

De préférence, le sucrant en poudre selon l'invention a une granulométrie comprise entre 10 et 130 µm, avec une répartition sensiblement gaussienne.

Le sucrant en poudre selon l'invention peut contenir également d'autres ingrédients en petites quantités, tels que des exhausteurs de goût, glutamate de sodium, et nucléotides (inosinate et guanylate de sodium), éthylmaltol et maltol. Ces ingrédients font partie des "micro-ingrédients" qui peuvent entrer dans la formulation intermédiaire de l'aliment ou prémix qui peut contenir aussi des émulsifiants gélifiants, antioxydants conservateurs, colorants. Ces dernières substances sont généralement calculées pour être présentes à raison de 5 à 10 kg par tonne dans l'aliment final.

Le sucrant en poudre selon l'invention peut être préparé très simplement, selon une technologie bien connue en alimentation humaine et dans la technologie de fabrication des arômes, par "micronisation", c'est-à-dire par atomisation et séchage d'un mélange liquide, pulvérisé dans un appareil approprié. Cet appareil peut prendre la forme d'une tour dans laquelle le mélange liquide est admis au sommet par une buse ou une turbine, la poudre atomisée obtenue étant récoltée à la base de la tour. Dans certains cas, si cela s'avère nécessaire, la tour peut être remplie d'un gaz inerte pour éviter les phénomènes d'oxydation.

Le sucrant en poudre selon l'invention peut être utilisé de deux façons dans l'alimentation humaine. D'abord, d'une façon classique, le sucrant selon l'invention peut être dispersé sur un support du type dextrose, silice ou amidon par exemple à raison de 10 à 75 parties pondérales de sucrant pour 90 à 25 parties pondérales de support. Sur la base des valeurs usuelles, cela va permettre de constituer un aliment final à une dose moyenne de 300 à 3'000 g/t, de préférence 1'650 g/t, ce qui correspond à une quantité d'édulcorant de l'ordre de 150 à 1'500 g/t et de potentiateur de 0,15 à 15 g/t sur la base de la dose moyenne de 1'650 g/t. Il faut bien comprendre que, puisque le sucrant selon l'invention est parfaitement homogène et que la granulométrie de ce sucrant est suffisamment fine, il n'y aura évidemment aucune difficulté à obtenir une formulation sucrante sur support, puis un aliment final, eux aussi parfaitement homogènes.

Les principaux domaines d'application concernés par les sucrants sont d'abord les produits laitiers tels que yogourts aromatisés, laits aromatisés, glaces, desserts frais ou congelés, poudings, mousses et crèmes ; ensuite les produits en poudre, notamment les crèmes., cacao, boissons aromatisées, desserts et glaces ; les boissons non alcoolisées, par exemple les boissons à base de fruits, les boissons à base de lait, les toniques, les boissons de type Cola, les boissons alcoolisées telles que cidres, bières brunes, boissons à base de vin ; et aussi les confiseries, les acidulés, les confitures, les gommes à mâcher (chewing-gums), les pâtisseries, les bonbons et les chocolats, les céréales, les cônes de glace, les mayonnaises, les sauces notamment de salades, les snacks, les soupes, ainsi que les édulcorants non-caloriques de table.

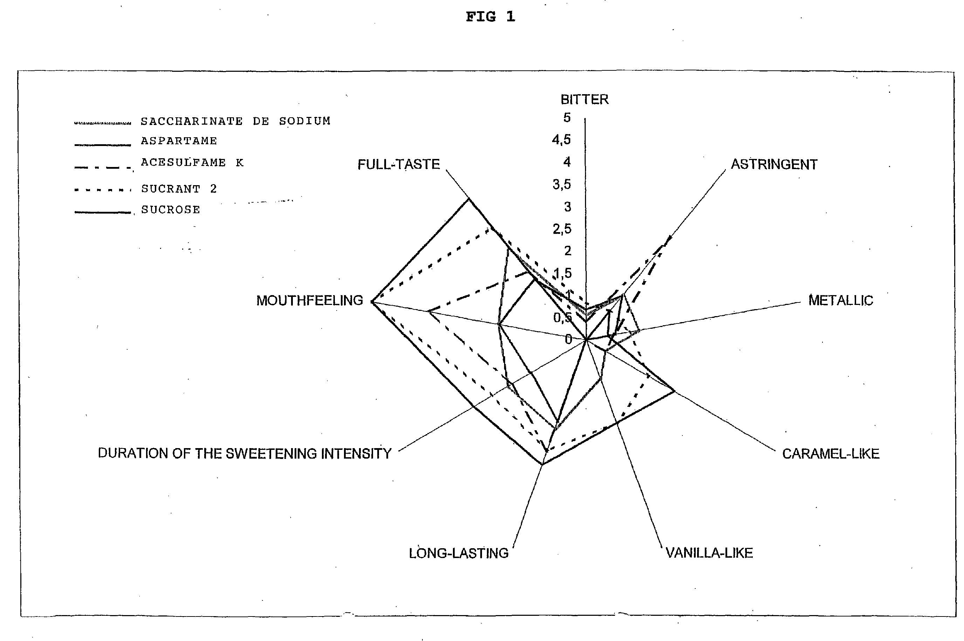

D'autres particularités et avantages de l'invention apparaîtront à la lecture de la description qui va suivre, à caractère illustratif et non limitatif. Cette description sera lue en référence aux Figures 1 à 4.

Les Figures 1 à 4 représentent les "spider web" (toiles d'araignée), résultats de l'analyse sensorielle quantitative descriptive (QDA) selon la norme AFNOR NF V 09-016 pour, respectivement,
-le saccharinate de sodium, l'aspartame, l'acésulfame K, le sucrant 2 et le sucrose ;
le saccharinate de sodium, le sucrant 2 et le sucrose ;
l'aspartame, le sucrant 2 et le sucrose ; et
l'acésulfame K, le sucrant 2 et le sucrose.

### 1) Préparation de sucrants selon l'invention

On prépare une solution A de saccharinate de sodium en introduisant 900 litres d'eau dans une cuve, en chauffant jusqu'à 60°C, puis en ajoutant lentement 1000 kg de saccharinate de sodium et en agitant la solution pendant 30 minutes jusqu'à la dissolution complète (la solution devient transparente ).

Parallèlement, dans une petite cuve remplie de 100 litres d'eau chauffée jusqu'à 70°C, on ajoute lentement le NHDC, l'arôme de type vanille, en quantités correspondant à la composition désirée pour le sucrant en préparation, puis on laisse dissoudre le produit pendant 30 minutes sous agitation.

On verse la solution B lentement dans la solution A.

Lorsque la solution obtenue devient transparente, on procède à l'opération d'atomïsation-séchage (spray-drying) dans une tour dont les conditions de travail sont les suivantes:
- Température de la solution :: 60°C
- Température d'air entrée :: 190°C
- Température d'air sortie :: 100°C

Vitesse de rotation de la turbine d'atomisation :15'000 tours/min. à 20'000 tours/min, la turbine pouvant être remplacée par une buse d'atomisation.

On obtient ainsi un sucrant selon l'invention, se présentant sous forme d'une poudre fine homogène ayant une granulométrie à répartition sensiblement gaussienne comprise entre 10 et 130 µm avec une moyenne de 48,5 µm et comprenant autour de 75'000'000 particules ou grains par gramme. Cette poudre est soluble dans l'eau.

On a ainsi réalisé les sucrants en poudre suivants, selon les potentiateurs utilisés et leur proportion exprimée en valeurs pondérales.

**SUCRANTS SELON L'INVENTION 1 à 7**

| **SUCRANTS DE L'INVENTION** | **EDULCORANTS** | **POTENTIATEURS** | **PROPORTIONS** |
|---|---|---|---|
| 1 | Saccharinate de sodium | NHDC/Ethylvanilline | 98,9 ; 1,0/0,1 |
| 2 | Saccharinate de sodium | NHDC/Ethylvanilline | 98,8 ; 1,0/0,2 |
| 3 | Saccharinate de sodium | NHDC/Ethylvanilline | 97,9 .; 2,0/0,1 |
| 4 | Saccharinate de sodium | NHDC/Ethylvanilline | 97,8/ 2,0/0,2 |
| 5 | Saccharinate de sodium | NHDC/Vanilline | 98,8 ;1,0/0,2 |
| 6 | Saccharinate de sodium | NHDC/Vanilline | 98,5 ;1,0/0,5 |
| 7 | Saccharinate de sodium | NHDC/Vanilline | 98,6 ;1,0/0,4 |

### 2) Préparation de sucrants comparatifs

On utilise le procédé de préparation décrit ci-dessus mais avec une solution B ne contenant que du NHDC.

**SUCRANTS COMPARATIFS 1 à 2**

| **SUCRANTS COMPARATIFS** | **EDULCORANTS** | **POTENTIATEURS** | **PROPORTIONS** |
|---|---|---|---|
| 1 | Saccharinate de sodium | NHDC | 99.0 ; 1,0 |
| 2 | Saccharinate de sodium | NHDC | 98.0 ;2,0 |

### 3) Test gustatif de comparaison avec le sucrose pour les sucrants de l'invention et les sucrants comparatifs

Les sucrants selon l'invention et les sucrants comparatifs de même composition mais sans arôme de type vanille ont été dissous dans de l'eau neutre de type Evian de façon à avoir un équivalent en sucrose de 5% et comparés à des solutions de sucrose de 5% par un comité de 3 personnes choisies pour leur aptitude à identifier et évaluer des propriétés gustatives.

Cette comparaison a permis de montrer pour tous les sucrants de l'invention testés un caractère sensoriel proche du goût du sucre, avec, par rapport aux sucrants comparatifs, la suppression du goût métallique ou amer et une augmentation de la sensation en bouche et de la durée du goût sucré.

Les sucrants 2 et 6 sont ceux qui sont les plus proches des solutions de sucrose.

### 4) Test d'analyse sensorielle quantitative descriptive (QDA)

Le sucrant 2 selon l'invention, le sucrose, et trois édulcorants intenses conventionnels, à savoir le saccharinate de sodium, l'aspartame, l'acésulfame K ont été mis en solution dans de l'eau de type Evian et soumis aux tests d'analyse sensorielle quantitative descriptive de la Norme AFNOR NF V 09-016.

Ce test consiste en l'attribution par un comité de 8 personnes choisies pour leur aptitude à identifier et évaluer des propriétés gustatives, pour chacune de ces substances, de notes de 0 à 5 pour chacune de 9 caractéristiques sensorielles importantes pour le goût.

Ces notes sont introduites dans le logiciel Tastel qui fournit pour chaque substance un graphe dénommé "spider web " (toile d'araignée) représentant les notes moyennes attribuées pour ces caractéristiques sensorielles selon 9 axes : "bitter" (amertume), "astringent" (astringence), "metallic" (goût métallique), "caramel-like", (goût de caramel), "vanilla-like" (goût de vanille), "long lasting" (longueur en bouche, mesurée par chronomètre), "duratïon of the sweetening intensity" (durée de l'intensité sucrante, mesurée par chronomètre), "mouth feeling" (sensation en bouche : si saveurs partout dans la bouche, bonne sensation en bouche ; si saveurs uniquement sur une zone précise de la langue, sensation en bouche faible ou inexistante) et "full-taste" (rondeur : équilibre des saveurs en bouche).

La Figure 1 est le "spider web" pour le saccharinate de sodium, l'aspartame, l'acésulfame K, le sucrant 2 et le sucrose..

La Figure 2 est le "spider web" pour le saccharinate de sodium, le sucrant 2 et le sucrose.

La Figure 3 est le "spider web" pour l'aspartame, le sucrant 2 et le sucrose

La Figure 4 est le "spider web" pour le l'acésulfame K, le sucrant 2 et le sucrose.

On constate sur la Figure 1 que le sucrant de l'invention a des caractéristiques sensorielles beaucoup plus proches du goût du sucre que les édulcorants de comparaison, en particulier un goût sucré de longue durée avec rondeur et sensation en bouche et absence d'astringence ou d'arrière-goût métallique ou amer.

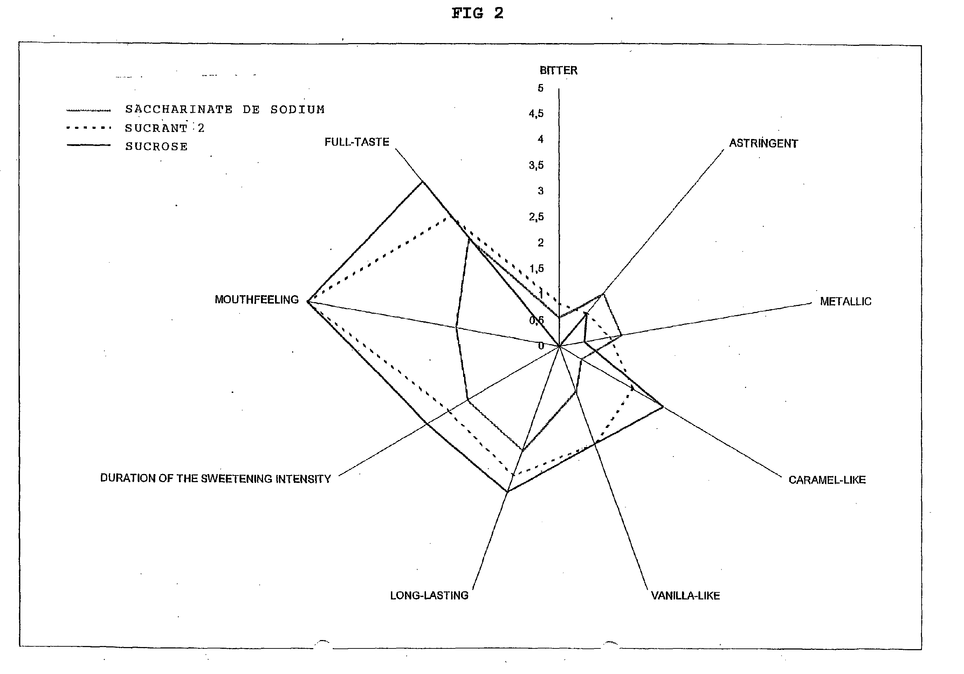

La Figure 2 montre que le saccharinate de sodium a un peu plus d'astringence et de goût métallique, et moins de goût caramel, de goût de vanille, de rondeur, de sensation en bouche, de durée de l'intensité sucrante et de longueur en bouche que le sucrant de l'invention.

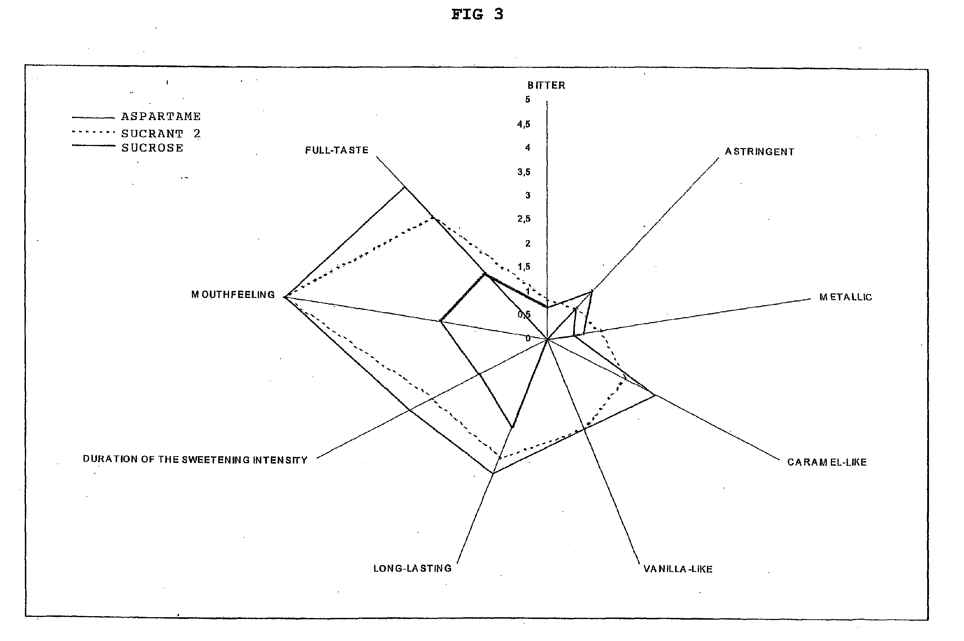

La Figure 3 montre que l'aspartame a plus d'astringence et de goût métallique, et moins de rondeur, de sensation en bouche, de durée de l'intensité sucrante et de longueur en bouche que le sucrant de l'invention, et n'a aucun goût caramel ou goût de vanille. Il a un goût très éloigné de celui du sucre.

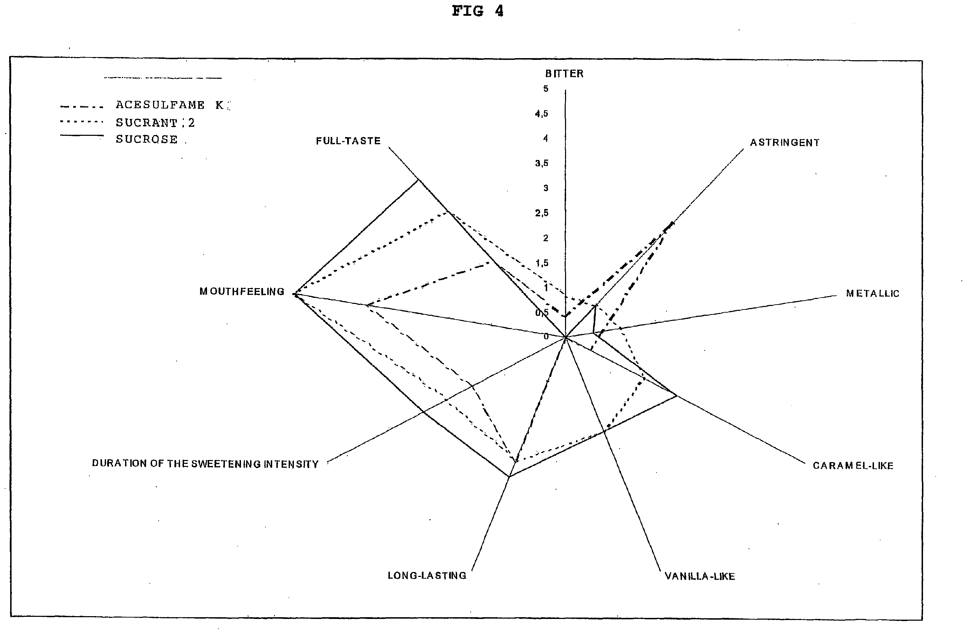

La figure 4 montre que l'acésulfame K a plus d'astringence, moins de goût de caramel, un peu moins de rondeur, de sensation en bouche et de durée de l'intensité sucrante, que le sucrant de l'invention.

## Revendications

1. Sucrant en poudre pour alimentation humaine se présentant sous forme d'un mélange intime dont la répartition édulcorant/potentiateur est sensiblement homogène, non statistique, et dont la proportion de l'édulcorant par rapport au potentiateur est sensiblement constante et égale d'une particule de poudre à l'autre, **caractérisé en ce** l'édulcorant est choisi parmi le saccharinate de sodium, le saccharinate de calcium, la saccharine, et un mélange de ces substances, et le potentiateur comprend un mélange de NHDC et d'un arôme de type vanille, les quantités de l'édulcorant et du mélange de NHDC et d'un arôme de type vanille étant choisies de façon à conférer au sucrant un caractère sensoriel le rapprochant du goût du sucre.

2. Sucrant selon la revendication 1, **caractérisé en ce que** l'arôme de type vanille est choisi parmi la vanilline et l'éthylvanilline.

3. Sucrant selon la revendication 2, **caractérisé en ce que** l'arôme de type vanille est la vanilline, et le rapport, en poids, entre les quantités de NHDC et de vanilline est de 2,5 à 1,5, en particulier de 2,2 à 1,8.

4. Sucrant selon la revendication 2, **caractérisé en ce que** l'arôme de type vanille est l'éthylvanilline, et le rapport, en poids, entre les quantités de NHDC et de vanilline est de 10 à 3, en particulier de 6 à 4.

5. Sucrant selon l'une des revendications précédentes, **caractérisé en ce qu'**il comprend, en poids, de 97,6 à 99,5 % de saccharinate de sodium, de 040 à 2,0 % de NHDC et de 0,10 à 0,80 % d'arôme de type vanille.

6. Sucrant selon la revendication 5, **caractérisé en ce qu'**il comprend, en poids, de 97,6 à 99,5 % de saccharinate de sodium, de 0.4 à 2.0 % de NHDC et de 0,1 à 0,4 % d'éthylvanilline.

7. Sucrant selon la revendication 5, **caractérisé en ce qu'**il comprend, en poids, de 97,7 à 99,3 % de saccharinate de sodium, de 0,40 à 1,5 % NHDC et de 0,30 à 0,80 % de vanilline.

8. Sucrant selon la revendication 7, **caractérisé en ce qu'**il comprend, en poids, 98,5 % de saccharinate de sodium, 1,0 % de NHDC et 0,5 % de vanilline.

9. Procédé de préparation d'un sucrant selon l'une des revendications précédentes., **caractérisé en ce qu'**on prépare un mélange en solution d'un édulcorant choisi parmi le saccharinate de sodium, le saccharinate de calcium, la saccharine, et un mélange de ces substances et d'un potentiateur comprenant un mélange de NHDC et d'un arôme de type vanille, puis qu'on pulvérise ce mélange par atomisation séchage pour obtenir une poudre.

10. Formulation alimentaire sucrante en granulés, **caractérisé en ce qu'**elle comprend un sucrant selon l'une des revendications 1 à 8 dispersé sur un support du type dextrose, silice ou amidon à raison de 10 à 75 parties pondérales de sucrant pour 90 à 25 parties pondérales de support.
